Europäisches Patentamt

(19) European Patent Office

Office européen des brevets

(11) Publication number: **0 009 846**
A1

## EUROPEAN PATENT APPLICATION

(21) Application number: **79200546.4**

(22) Date of filing: **27.09.79**

(51) Int. Cl.³: **B 29 H 9/10**
**B 60 C 9/00, C 23 C 17/00**

(30) Priority: **03.10.78 NL 7809964**

(43) Date of publication of application:
**16.04.80 Bulletin 80/8**

(84) Designated Contracting States:
**AT BE CH DE FR GB IT LU NL SE**

(71) Applicant: **Akzo N.V.**
**Ijssellaan 82**
**NL-6826 DW Arnhem(NL)**

(72) Inventor: **Van Ooij, Willy Johan**
**Admiraal Helfrichlaan 75**
**NL-6952 GC Dieren(NL)**

(74) Representative: **Sieders, René et al,**
**P.O.Box 314**
**NL-6800 AH Arnhem(NL)**

(54) **Steel wire, cord or cable coated with a metal alloy, process for the manufacture thereof and products formed from an elastomeric material reinforced with one of said elements.**

(57) A thinly coated steel wire, which preferably has a diameter of 0.05 to 0.75 mm, is provided for reinforcing an article which is vulcanizable with sulphur to produce an elastomer such as rubber for vehicle tires. The thin coating is formed by an alloy which, in addition to copper and zinc, contains 2 to 19 per cent by weight of nickel. The coated steel wire has improved adhesion to rubber during vulcanization. The invention also provides reinforcing cable or cord made from the steel wire and articles of elastomeric material reinforced with it, such as vehicle tires. A process is also provided for the manufacture of the coated steel wires.

fig.6

fig.7

fig.8

fig.9

EP 0 009 846 A1

TITLE MODIFIED
see front page

Akzo N.V., Arnhem                    -1-                    AKU 1785 R

Steel wire coated with a metal alloy, reinforcing cable or cord made
from it and objects of elastomeric material reinforced with it, and a
process for the manufacture of these steel wires.

The invention relates to steel wire, more particularly steel wire having a diameter of 0,05 to 0,75 mm, for reinforcing a material vulcanizable with sulphur to obtain an elastomer, such as rubber for vehicle tyres, which wire is covered with a thin coating of an alloy which at least consists of copper and zinc and can be bonded to the elastomeric material during the vulcanization process. The invention also comprises reinforcing cable or cord made from these steel wires and objects of elastomeric material reinforced with it, more particularly pneumatic tyres for vehicles. The invention, also relates to a process for the manufacture of said steel wires. Steel wires and processes of the type indicated above are known. For instance in the automobile tyre manufacturing industry large scale use is made for the reinforcement of rubber with steel cord built up from a number of wires or filaments covered with a thin coating of brass. Then the steel cords made up of brass-coated wires or filaments are first brought into contact with unvulcanized rubber. Subsequently, the rubber is subjected to a vulcanization treatment in which the adhesion between rubber and brass is effected. The brass-coated steel cords generally make it possible to attain a reasonable adhesion level if the various process conditions, particularly during vulcanization, and the properties and/or the state of the starting rubber are accurately controlled. It is generally known that the tyres of both passenger cars and lorries are subjected to severe loading conditions, more particularly high speeds and overloading, and are yet required to have a long life.

If the reinforcing steel cord present in the automobile tyre is to perform its function properly, then the bond between cord and rubber must both be strong and permanent. In other words, the adhesion between steel cord and rubber plays an essential role. In this connection the adhesion between cord and rubber has for many years been the subject of a great deal of research both by manufacturers of automobile tyres and manufacturers of steel cord. Particularly as a result of the extremely high dynamic loads to which automobile tyres are subjected nowadays the demands made on the adhesion between steel cord and rubber have become so high that even brass-coated steel filaments do not provide satisfactory adhesion under all circumstances. As to the degree of adhesion, i.e. bonding strength, between steel cord and brass-coated filaments a distinction should be made between initial adhesion and adhesion after aging. Initial adhesion is generally determined on cord by means of a tensile tester, the cord having been bonded by vulcanization to rubber which has not undergone any aging treatment. Adhesion after aging may be classified into adhesion after green aging and adhesion after steam aging. In the case of adhesion after green aging the unvulcanized rubber is previously subjected to an aging treatment in a moist atmosphere, for instance storage for a variable period at $20^{\circ}C - 40^{\circ}C$ and at 90 up to almost 100% relative humidity. The rubber thus aged is subsequently bonded by vulcanization to a metal object, such as steel cord formed from filaments coated with a metal alloy, after which the adhesion after green aging is measured on the tensile tester. This green aging treatment causes a change in adhesion between the rubber and the reinforcing wires embedded therein.

In the case of adhesion after steam aging a steel object, such as steel cord, coated with a metal alloy is first bonded to non-aged rubber by vulcanization. Not until then is the rubber with the object vulcanized therein subjected to an aging treatment under the influence of moisture and heat in the form of steam over a period of, for instance, 4 hours at a temperature of $120^{\circ}C$. After that aging treatment the adhesion after steam aging is measured on the tensile tester.

Another important quality demand made on objects bonded to metal objects by vulcanization is the degree of rubber coverage. This is the amount of rubber left on the metal object pulled out of the vulcanized rubber after the tensile test. This amount of rubber is evaluated visually and expressed as a percentage. From said adhesion determinations on brass-coated steel objects it has been found that the adhesion after aging, i.e.

after green aging and after steam aging, will often be considerably reduced and may actually become 40 to 100% lower than the initial adhesion, which decrease is partly dependent on the used rubber composition.

The invention has for its object to provide a product covered with such a coating as leads to only very little loss of initial adhesion to rubber after aging. The steel wire for reinforcing a material vulcanizable with sulphur to obtain an elastomer, which wire is covered with a thin coating of an alloy containing copper and zinc and can be bonded to the elastomeric material during the vulcanization process, is characterized according to the invention in that besides copper and zinc the alloy contains 2 - 19 per cent by weight of nickel, calculated on the weight of the coating. According to the invention it is preferred, however, that use should be made of an alloy, containing 4 to 18 per cent by weight of nickel. According to the invention favourable results are guaranteed if the alloy is a mixture which besides zinc contains 50 to 80 per cent by weight of copper and 2 to 19 per cent by weight of nickel. According to the invention it is preferred that the alloy should contain about 60-68 per cent by weight of copper, 20-35 per cent by weight of zinc and 2 - 19 per cent by weight of nickel. According to the invention the alloy is a ternary alloy of copper, zinc and nickel and the layer thickness of the copper-zinc-nickel alloy is in the range of 30 to 750 nanometer, which layer can be present wires having a final diameter in the range of 0,05 mm to 0,75 mm.

The invention also comprises objects formed from an elastomeric material such as pneumatic tyres for vehicles reinforced with reinforcing elements which are formed from said steel wires coated with the special copper-zinc-nickel alloy according to the invention. The steel wires and the reinforcing cable or cord made therefrom according to the invention are particularly suitable for use in pneumatic tyres for vehicles, and more particularly in the carcasses and/or in the belts of vehicle tyres, but their field of application may also include conveyor belts and hoses. The invention further comprises a process for the manufacture of steel wire which, generally after being formed into a cable a cord or mat, can be used for reinforcing an object of elastomeric material, such as a pneumatic tyre, after having been bonded to it during vulcanization, the diameter of the starting wire being reduced by drawing to a final diameter in the range of 0,05 mm to 0,75 mm, and the wire is subjected to at least one thermal treatment and

-4-

is thinly coated with an alloy containing at least copper and zinc, which process is characterized in that use in made of an alloy which besides copper and zinc contains 2 to 19 per cent by weight of nickel, which percentage is calculated on the weight of the coating.

A favourable embodiment of the process according to the invention is characterized in that use is made of a metal alloy containing about 60 to 68 per cent by weight of copper, 20 to 35 per cent by weight of zinc and 2 to 19 per cent by weight of nickel.

According to the invention said single layer of a ternary copper-zinc-nickel alloy can be applied to a thickness in the range of 30 to 750 mm in a simple manner.

The copper-zinc-nickel alloy according to the invention may be electrolytically applied to the surface of a steel wire whose diameter has been drawn to a value of, say, 1,15 mm. After the alloy has been applied to the steel wire, the latter may be given its final diameter after a number of successive drawing stages.

An alloy of 62% wt% copper, 20 wt% zinc and 18wt% nickel may be applied to a steel wire, for instance, by first passing the wire through a first electrolytic bath in which a CuN; alloy is deposited on the wire under the following conditions:

bath composition

200g/l $K_4P_2O_7$  potassium pyrophosphate

12,5g/l $Cu_2P_2O_7$  copper (II) pyrophosphate

50g/l $NiCl_2.6H_2O$  nickel chloride

bath temperature $50^\circ$C; current density

6 amp/dm$^2$; pH = 9 ± 1.

The result of the first bath is a steel wire coated with 3 grammes of CuNi - alloy per kg of steel.

Subsequently, the wire coated with this CuNi - alloy is passed through a second bath for adding zinc. In this second bath the following conditions should be fulfilled :

bath composition

300g/l $ZnSO_4.7H_2O$  zinc sulphate

25g/l $NH_4Cl$ ammonium chloride

15g/l $H_3BO_3$ boric acid

bath temperature $20^\circ$C; current density

6amp/dm$_2$; pH = 4,5.

The result of the second bath is that to the wire coated with the CuNi layer there is applied 0,75 g zinc per kg of steel.

Next, the resulting wire is dried and kept at $300^{\circ}$C for 5 seconds by resistance heating. The resulting steel wire has a coating of a ternary CuZnNi -alloy made up of 62 wt% Cu, 20% wt% zinc and 18 wt% nickel.

An alloy of 64 wt% Cu, 24 wt% Zn and 12 wt% Ni may be applied to a steel wire by first passing the wire through a first electrolytic bath in which a CuNi alloy is applied to the wire under the following conditions:

bath composition    200g/1 $K_4P_2O_7$

                      12,5g/1 $Cu_2P_2O_7$

                      50g/1 $NiCl_2.6H_2O$

bath temperature $50^{\circ}$C; current density

4 amp/dm$^2$; pH = 9 ± 1.

The result of the first bath is a steel wire coated with 3 grammes of CuNi-alloy per kg of steel. Subsequently, the wire coated with this CuNi - alloy is pased through a second bath for adding zinc.

In this second bath the following conditions should be used:

bath composition    300g/1 $ZnSO_4.7H_2O$

                      25g/1 $NH_4Cl$

                      15g/1 $H_3BO_3$

bath temperature $50^{\circ}$C; current density

6 amp/dm$^2$; pH = 4,5.

Passing the wire through the second bath results in applying to the wire 1 g of zinc per kg of steel in addition to the previously applied CuNi coating. The resulting wire is dried and kept at $300^{\circ}$C for 5 seconds by resistance heating. The steel wire then obtained has a ternary CuZnNi - alloy coating made up of 64 wt% Cu, 24 wt% Zn and 12 wt% Ni.

An alloy of 66wt% Cu, 30 wt% Zn and 4 wt% Ni may be applied to a steel wire by first passing the wire through a first electrolytic bath, in which a CuNi-alloy is applied to the wire under the following conditions:

bath composition    250g/1 $K_4P_2O_7$

                      50g/1 $Cu_2P_2O_7$

                      50g/1 $NiCl_2.6H_2O$

bath temperature $50^{\circ}$C; current density

6 amp/dm$^2$; pH = 9 ± 1.

The result of the first bath is a steel wire coated with 3g CuNi-alloy per kg steel. Subsequently, the wire coated with this CuNi- alloy is passed through a second bath for adding zinc. In the second bath the following conditions are used:

bath composition    300g/l $ZnSO_4.7H_2O$
25g/l $NH_4Cl$
15g/l $H_3BO_3$

bath temperature: 20°C; current density 6 amp/dm$^2$; pH = 4,5.

The result of the second bath is that on the wire already coated with the CuNi - layer 1,25 g of zinc is applied per kg of steel.

Next, the resulting wire is dried and kept at 300°C for 5 seconds by resistance heating. The resulting wire has a ternary CuZnNi - alloy made up of 66 wt% Cu, 30 wt% Zn and 4 wt% Ni. Prior to the electrolysis all steel wire's must be pickled in the usual manner.

Instead of alloys of the above- mentioned composition various other copper-zinc-nickel alloys may be applied to the steel wire, the weight percentage of nickel amounting 2 to 19%. More particularly, the nickel may be used in an amount of 3,5,6,7,8,9,10,11,13,14,15,16 or 17% by weight. If use is made of a weight percentage nickel in the alloy of less than 2%, then no distinct improvement is found to be obtained of the adhesion to rubber of the coated steel wire. If the weight percentage nickel in the alloy is higher than 19%, then the adhesion to rubber will become distinctly inferior to that obtained for the conventional steel wire coated with brass.

The electrolytic deposition of the coating according to the invention can be effected in    principle also by adding the desired amount of nickel salt to an existing bath commonly used for brass-coating.

It should be added that from the Netherlands Patent Application 7 101 871 and the corresponding German Application 2 106 226 it is known to cover steel cords with a multilayer, the coating being made up of, inter alia, a copper-nickel-alloy containing at least 20% nickel. It is preferred then that use should be made of a nickel-copper alloy made up of 60-80% nickel and 40-20% copper. In said patent publication no mention is made of a simple way of applying to an object a single and effective coating according to the invention consisting of a ternary copper-zinc-nickel alloy.

The invention will be further described with reference to a few

0009846

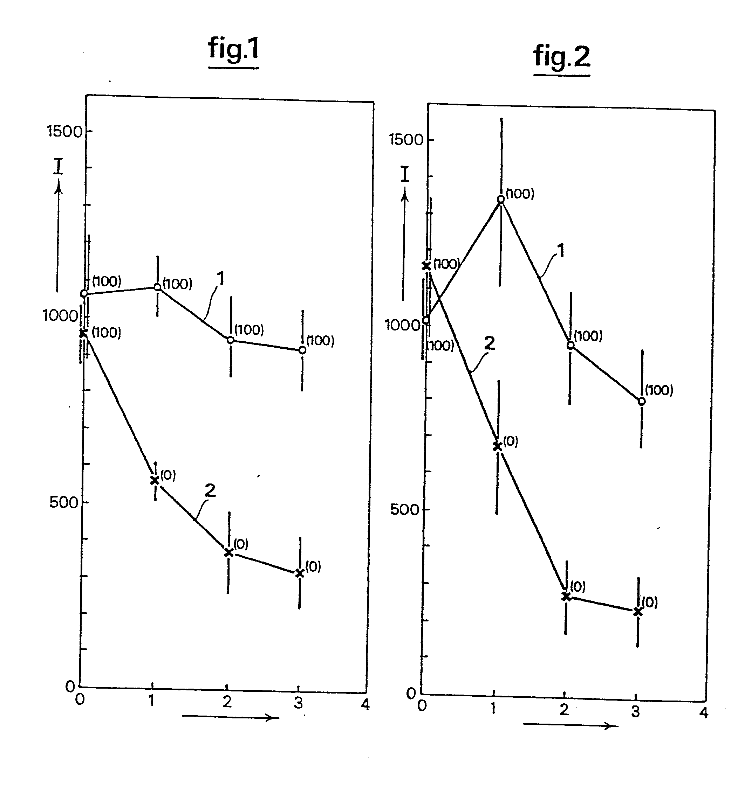

illustrative embodiments of which the results are given in Table 1
and in Figures 1 and 2.

TABLE 1

| Alloy Percentage by weight | Type X rubber | | | | | Type Y rubber | | | | |
|---|---|---|---|---|---|---|---|---|---|---|
| | CuZn | | CuZnNi | | | CuZn | | CuZnNi | | |
| | Cu 65% | Zn 35% | Cu 62% | Zn 20% | Ni 18% | Cu 65% | Zn 35% | Cu 62% | Zn 20% | Ni 18% |
| I.A. (initial adhesion) in N/64 mm$^2$ | 940(100) | | 1020(100) | | | 1150(100) | | 1010(100) | | |
| S.A. (adhesion after steam aging) in N/64 mm$^2$ | 550(0) | | 950(100) | | | 670(0) | | 980(100) | | |
| $\frac{\text{I.A.-S.A.}}{\text{I.A.}} \cdot 100\%$ | 41% | | 7% | | | 42% | | 3% | | |

The type X and Y rubbers are different rubber mixtures which are
commonly used by various firms for the manufacture of automobile tyres.
The table shows that with the type X rubber the initial adhesion of
steel coated with a brass (CuZn) alloy is of the same level as that of
steel coated with a copper-zinc-nickel alloy (CuZnNi) according to the
invention. With the type Y rubber the initial adhesion of steel covered
with a conventional brass coating also is of the same level as when
use is made of the CuZnNi coating according to the invention.
Particularly noticeable is that the adhesion after steam aging
(4 hours, 120°C) is considerably better when use is made of the
CuZnNi - coating according to the invention.
The table further shows that when use is made of the CuZnNi-coating
according to the invention the decrease in adhesion after steam aging
is only very small, viz. as little as 7% and 3% for the types X and Y,
respectively, and probably is to be attributed to the properties of
the rubber. The use of a brass (CuZn) coating, however, leads to a
decrease in adhesion after steam aging of as high as 41% and 42%
for the types X and Y, respectively. Also the values in brackets of rubber coverage are very favourable for the coating according to the invention. Figures 1 and 2 show the change with time of adhesion under the influence of moisture prior to vulcanization. The adhesion had been determined on rubber after an aging treatment at $20^{\circ}C$ and 90% relative humidity over periods of one, two and three weeks. The Figures 1 and 2 relate to the rubber types X and Y, respectively. In the two figures the adhesion is plotted in N/64 mm$^2$ on the axis in the direction indicated by the arrow I. On the other axis in the two figures the time in weeks is plotted. In both figures the curve 1 indicates the change in adhesion for steel coated with the CuZnNi-alloy according to the invention, in which the weight percentages Cu, Zn and Ni are 62, 20 and 18%, respectively. The curves 2 indicate the change in adhesion for a brass coating containing Cu and Zn in amounts of 65 and 35 per cent by weight, respectively. In both figures the curves 1 and 2 were formed by interconnecting 4 points. The first point of each line lies on the adhesion axis and represents the afore-mentioned initial adhesion. The other three points of each of the four lines relate to adhesion after green aging.

The figures 1 and 2 show that for the two rubber types X and Y there is a decrease in adhesion after green aging over a period of three weeks. From the shape of the upper curves 1, however, it can be seen that when use is made of the coating of the Cu-Zn-Ni alloy according to the invention the adhesion after green aging decreases only very little, whereas its loss of adhesion is very high when use is made of the conventional brass coating (Cu Zn)

Furthermore, at each of the measuring points in the Figures 1 and 2 a number is placed in brackets which represents the afore-mentioned percentage of rubber coverage. These numbers show that when use is made of the coating according to the invention the rubber coverage does not change after green aging for 1,2 and 3 weeks and is maintained at 100%. When use is made of the conventional brass coating, the rubber coverage after 1,2 and 3 weeks is 0%.

So from the results of comparative adhesion determinations given in the table and in the Figures 1 and 2 it can be seen that the aging behaviour of the adhesion between rubber and steel objects to which a coating according to the invention has been applied should be regarded as particularly favourable.

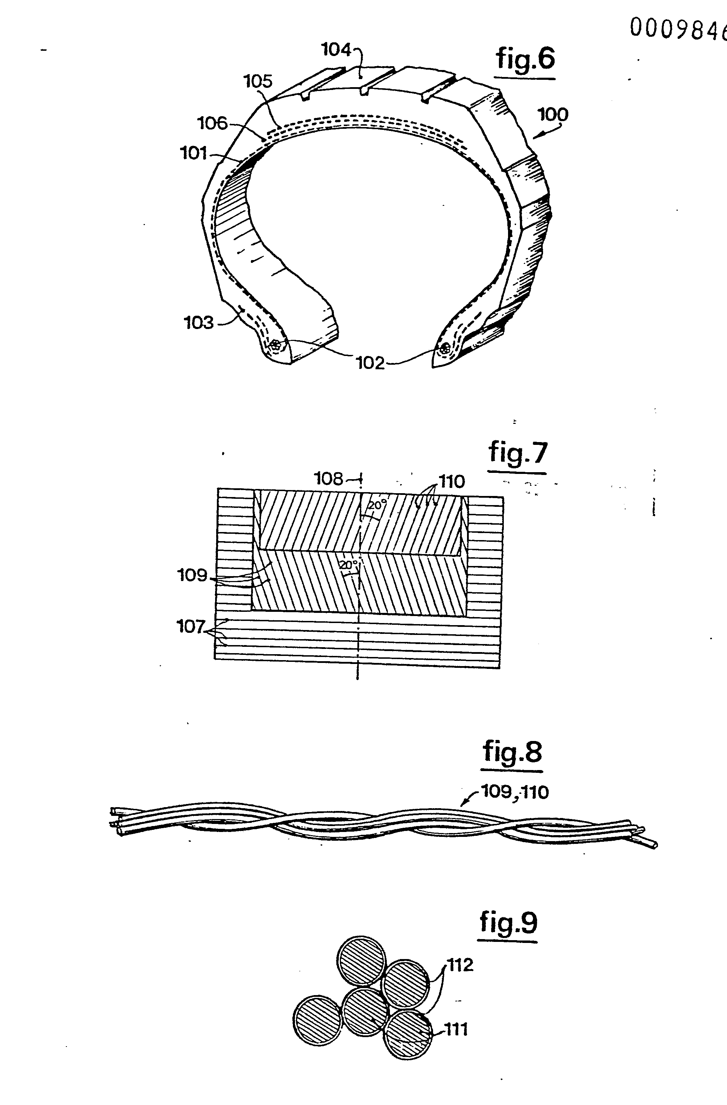

Fig. 6 is a schematic, cross-sectional and partly perspective view of an automobile tyre 100. The tyre 100 is in the first place reinforced with a carcass 101, which extends throughout the cross-sectional area of the tyre from the left bead 102 to the right bead 102. In the bead regions are chafers 103. Beneath the rubber tread of the tyre is a 2-ply steel belt. The one ply is indicated by 105 and the other ply by 106.

Figure 7 is a schematic illustration of the positioning of the reinforcing cords in the carcass 101 and in the plies 105, 106 viewed from the tread 104 of the tyre. It shows that the cords 107 of the carcass 101 run in radial direction of the tyre 100 and make an angle of $90^{\circ}$ with the axis 108. The cables or cords 109 of the ply 106 make an angle of $20^{\circ}$ with the one side of the axis 108 and the cords 110 of the ply 105 make an angle of $20^{\circ}$ with the other side of the axis 108. The reinforcing cables 109 and 110 may be steel cables of the type indicated in Figure 8, which is described in detail in U.S. Patent Specification 4 022 009.
Figure 9 is a cross-sectional view of the cable of Figure 8. It shows that the cable is made up of five wires, each having a steel core 111 and a thin coating 112 consisting of the ternary alloy of copper, zinc and nickel according to the present invention.

Table II gives the results of some other experiments for two rubber types A and B commonly employed in the automobile tyre manufacturing industry. The type A rubber contains a cobalt salt. The type B rubber contains an adhesive system made up of a formaldehyde donor, resorcinol and silicic acid.

TABLE II

| Alloy | CuZn | | CuZnNi | | | CuZnNi | | |
|---|---|---|---|---|---|---|---|---|
| | Cu 65% | Zn 35% | Cu 66% | Zn 30% | Ni 4% | Cu 64% | Zn 24% | Ni 12% |
| Initial adhesion A-Rubber in N/64 mm$^2$ | 1220(100) | | 1160(100) | | | 1190(100) | | |
| Initial adhesion B-rubber in N/64 mm$^2$ | 1340(100) | | 1310(100) | | | 1280(100) | | |
| Adhesion after steam aging in N/64 mm$^2$; 4 hours, 120°C, saturated steam A-Rubber | 980(50) | | 1160(100) | | | 1340(100) | | |
| Ditto; B-Rubber | 830(40) | | 1220(100) | | | 1320(100) | | |
| Adhesion after salt test; 4 hours, 90°C immersion in 5%-NaCl solution A-Rubber | 410(O) | | 1100(100) | | | 1270(100) | | |
| Dito B-Rubber | 470(O) | | 1140(100) | | | 1270(100) | | |
| Adhesion after ammonia test in exsiccator, 65 hours over 12,5%-NH solution at 20°C A-Rubber | 400(O) | | 570(30) | | | 1150(90) | | |
| Ditto; B-Rubber | 460(O) | | 530(20) | | | 1120(90) | | |
| Adhesion after exp. to moisture, 7 days, 90% R.H., 20°C in air A- Rubber | 660(O) | | 1000(100) | | | 1000(100) | | |
| Ditto; B-Rubber | 740(O) | | 900(100) | | | 900(100) | | |

Table II shows favourable initial adhesion both for brass and for the CuZnNi-alloy. It is true that for instance for the type A rubber the numerical values 1160 and 1190 found for the CuZnNi - alloy are somewhat lower than the value 1220 found for brass, but these differences are within the spread of the measured values, For the CuZnNi - alloy according to the invention the adhesion after steam aging is in all cases clearly better than for brass. Table II particularly shows that after a salt test both adhesion and rubber coverage for the CuZnNi - alloy according to the invention are very good. This is of great importance in that in winter the steel cord in automobile tyres is actually exposed to the action of brine. Adhision and rubber coverage are also favourable for the steel coated with CuZnNi-alloy according to the invention subjected to an ammonia test.

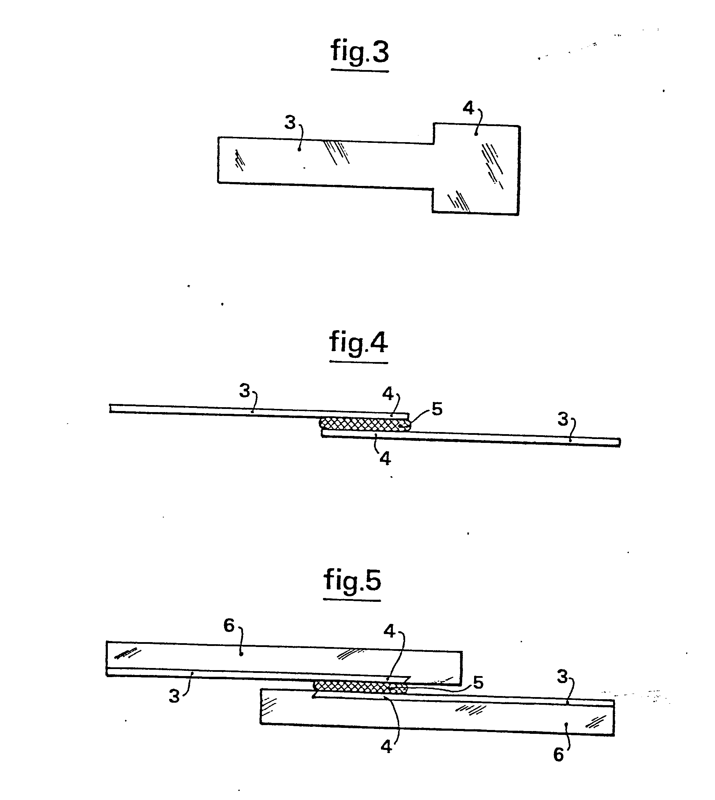

The test results mentioned in the Tables I and II and in the Figures 1 and 2 were obtained by carrying out adhesion measurements on plates of the type given in Figure 3. Each plate has a thickness of 0,5 mm and consists of a shank 3 to be clamped in a tester having a length of 22 mm and a width of 4 mm and a square part 4 of 8 x 8 mm. The metal plates were made from homogeneous cold-rolled alloys. Figure 4 shows two of these metal plates after they were bonded to a piece of rubber 5 by vulcanization. When a few identical plates are clamped in an Instron tensile tester, thicker additional plates are provided against the thin plates to obtain a better test procedure. The adhesion obtained in the various runs on the tensile tester is read in Newton, so that when use is made of rubber-covered square surfaces of 8 x 8 mm the adhesion is measured in newton/64 $mm^2$. The tensile tests for determining the adhesion were carried out at room temperature ($20^{\circ}$C) and at a tensile rate of 5 mm/min on an Instron tensile tester. When the two metal plates are bonded together by vulcanization they are, with the rubber in between them, placed in a vulcanizing press in which they are subjected to a high mechanical pressure. Prior to vulcanization the rubber plate has a thickness of about 2 mm and after vulcanization about 0,5 mm. The elastomeric material to be used on the various objects according to the invention may be composed of different materials or combinations of materials, provided that the elastomeric material displays the desires properties,

0009846

such as some capability of elastic deformation. And in any case it should bepossible for the elastomeric material to be vulcanized with sulphur. The component substances of the elastomeric material are formed by synthetic and natural polymers displaying plastic deformation behaviour before vulcanization and rubber-elastic behaviour after vulcanization, as is more particularly the case with synthetic and natural rubber. As examples of such polymers may be mentioned polypentadiene, polybutadiene, polyisoprene, poly(butadiene-styrene), poly(butadiene-acrylonitrile), poly(isobutene-isoprene), polychloroprene. Moreover, to the elastomeric material there may have been added the usual fillers, additives and vulcanizing agents, such as carbon black, softening agents, anti-oxidants, sulphur, zinc oxide, stearic acid and accelerators.

The afore-mentioned steel wires are made from steels, such as carbon steel, that are commonly employed for reinforcing automobile tyres. It should be added that by copper-zinc-nickel alloys are to be understood here one- or multi-phase, practically solid solutions or intermetallic compounds.

U.S. Patent Specification 2 154 834 describes a steel wire to be bonded to rubber, which steel wire is first coated with a layer of zinc and subsequently with a coating of copper and a coating of nickel. Alternatively, the zinc coating may be covered with a copper-nickel coating. The steel wire described in said U.S. Patent Specification is therefore always provided with two or three separate coatings, no zinc ever being present in the outer coating, as a result of which of the coated steel wires the adhesion to rubber for automobile tyres will not be optimal.

Also U.S. Patent Specifications 2 296 838 and 2 939 207 and Britisch Patent Specification 801 298 describe coated steel wires for reinforcing rubber, the coating consisting of two or three separate layers. These publications do not reveal the steel wires coated with the ternary copper-zinc-nickel alloy containing 2 - 19 per cent by weight of nickel according to the invention nor are any particularly favourable properties known from them.

Within the scope of the present invention various modifications may be introduced. More particularly, the invention may be applied to thin steel strips or tapes instead of to thin steel wires or filaments.

## Claims

1) Steel wire having a diameter of 0,05 to 0,75 mm for reinforcing a material vulcanizable with sulphur to obtain an elastomer, such as rubber for vehicle tyres, which wire is covered with a thin coating of an alloy containing copper and zinc and can be bonded to the elastomeric material during the vulcanization process, characterized in that besides copper and zinc the alloy contains 2 to 19 per cent by weight of nickel, calculated on the weight of the coating.

2) Steel wire according to claim 1, characterized in that the alloy contains 4 to 18 per cent by weight of nickel.

3) Steel wire according to claim 1, characterized in that besides zinc the alloy contains 50 to 80 per cent by weight of copper and 2 to 19 per cent by weight of nickel.

4) Steel wire according to claim 1, characterized in that the alloy contains about 60 to 68 per cent by weight of copper, 20 to 35 per cent by weight of zinc and 2 to 19 per cent by weight of nickel.

5) Steel wire according to one or more of the preceding claims, characterized in that the alloy is formed by a ternary alloy of copper, zinc and nickel.

6) Reinforcing cable or cord for elastomeric material , characterized in that it is composed of a number of steel wires according to one or more of the preceding claims.

7) Objects of vulcanized elastomeric material reinforced with reinforcing elements bonded thereto during vulcanization, more particularly vehicle tyres, characterized in that the reinforcing elements are built up of one or more of the steel wires according to one or more of the claims 1 - 5.

8) A process for the manufacture of steel wire according to one or more of the claims 1 to 5, which wire, after being formed into a cable a cord or mat can be used for reinforcing an object of an elastomeric material, such as a vehicle tyre, after having been bonded to it during the vulcanization process, the diameter of the starting wire being reduced by drawing to a final diameter in the range of 0,05 to 0,75 mm, and the wire is subjected to at least one thermal treatment and is coated with a thin layer of an alloy comprising copper and zinc, characterized in that use is made of an alloy which besides copper and zinc contains 2 - 19 per cent by weight of nickel, calculated on the weight of the coating.

9) A process according to claim 8, characterized in that use is made of an alloy which contains 4 to 18 per cent by weight of nickel.

10) A process according to claim 8, characterized in that use is made of an alloy which contains zinc and nickel and from 50 to 80 per cent by weight of copper.

11) A process according to claim 8, characterized in that use is made of a metal alloy which contains 60 to 68 per cent by weight of copper, 20 to 35 per cent by weight of zinc and 2 to 19 per cent by weight of nickel.

fig.1

fig.2

## fig.3

## fig.4

## fig.5

fig.6

fig.7

fig.8

fig.9

## DOCUMENTS CONSIDERED TO BE RELEVANT

| Category | Citation of document with indication, where appropriate, of relevant passages | Relevant to claim |
|---|---|---|
| A | US - A - 3 749 558 (J.P. DILLEN-SCHNEIDER)<br>  * Claim 1; column 1, lines 45-49 *<br><br>-- | 1 |
| A | US - A - 2 939 207 (O.E. ADLER) | |
| A | US - A - 2 154 834 (W. DE LAMATTER) | |
| A | US - A - 2 296 838 (E.C. DOMM)<br><br>---- | |

**CLASSIFICATION OF THE APPLICATION (Int. Cl. 3)**

B 29 H   9/10
B 60 C   9/00
C 23 C  17/00

**TECHNICAL FIELDS SEARCHED (Int.Cl. 3)**

B 29 H   9/10
B 60 C   9/00
C 23 C  17/00
C 25 D   5/50

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 08-01-1980 | BRACKE |

EPO Form 1503.1   06.78